**Europäisches Patentamt**

**European Patent Office**

**Office européen des brevets**

(11) Veröffentlichungsnummer: **0 035 197 B1**

(12) **EUROPÄISCHE PATENTSCHRIFT**

(45) Veröffentlichungstag der Patentschrift: 27.04.83

(21) Anmeldenummer: **81101258.2**

(22) Anmeldetag: **21.02.81**

(51) Int. Cl.³: **B 29 B 3/00**, B 29 C 17/00

(54) Vorrichtung zum Erwärmen plattenförmiger Halbzeuge aus thermoplastischen Kunststoffen.

(30) Priorität: **01.03.80 DE 3007999**

(43) Veröffentlichungstag der Anmeldung:
**09.09.81 Patentblatt 81/36**

(45) Bekanntmachung des Hinweises auf die Patenterteilung:
**27.04.83 Patentblatt 83/17**

(84) Benannte Vertragsstaaten:
**BE DE FR GB IT NL**

(56) Entgegenhaltungen:
**DE-A-2 128 667**
**DE-A-2 614 986**
**DE-A-2 716 055**
**DE-A-2 728 825**
**DE-B-1 072 638**
**DE-B-2 216 651**
**DE-B-2 346 561**
**DE-C-1 083 745**

(73) Patentinhaber: **BASF Aktiengesellschaft,
Carl-Bosch-Strasse 38, D-6700 Ludwigshafen (DE)**

(72) Erfinder: **Hagen, Karl, Dr., Duerkheimer Strasse 2,
D-6701 Friedelsheim (DE)**
Erfinder: **Scholl, Karl-Heinz, Dr., Muehltorstrasse 4,
D-6715 Lambsheim (DE)**
Erfinder: **Schmelzer, Gerhard, Friesenstrasse 16,
D-6700 Ludwigshafen (DE)**

Vorrichtung zum Erwärmen plattenförmiger Halbzeuge aus thermoplastischen Kunststoffen

Die Erfindung bezieht sich auf eine Vorrichtung zum Erwärmen plattenförmiger Halbzeuge aus thermoplastischen Kunststoffen, insbesondere aus faserverstärkten Thermoplasten, mit einem Infrarot-Heizaggregat, in welchem die Heizstrahler in ihrer Emissionsleistung zeitabhängig gesteuert werden und dem die Halbzeuge über ein Transportband zugeführt werden. Eine derartige Vorrichtung ist vorbekannt.

Die maschinelle Weiterverarbeitung plattenförmiger Halbzeuge aus thermoplastischen Kunststoffen bzw. aus faserverstärkten Thermoplasten zu Formkörpern erfolgt üblicherweise in einem intermittierenden Vorgang, dessen Zeittakt im wesentlichen von den Dimensionen, dem Aufbau und dem Material der Halbzeuge bestimmt wird. Eine wesentliche Komponente eines solchen Arbeitstaktes ist die Zeit, die für das Erwärmen derHalbzeuge auf die erforderliche Verarbeitungstemperatur benötigt wird. In ihrer Einpassung in die Arbeitsfrequenz der Fertigung und in einer, den Eigenschaften der Halbzeuge entsprechenden Variationsmöglichkeit der Energieübertragung liegen die Ansätze für die Entwicklung von Optimierungs- und Rationalisierungsmassnahmen.

Es ist bekannt, dass im allgemeinen das Aufheizen thermoplastischer Kunststoffe mit relativ kleinen Wärmezuführungsraten erfolgen muss, da die geringe Wärmeleitfähigkeit der Thermoplaste einerseits und ihre Temperaturempfindlichkeit andererseits nur eine geringe Wärmebeaufschlagung zulassen. Zur Erzeugung der notwendigen thermischen Energie ist es bekannt, sogenannte Infrarot-Heizaggregate in den verschiedensten Ausführungen zu verwenden. Die Erwärmung der Halbzeuge erfolgt dabei nicht allein durch Strahlung, sondern auch durch Wärmeleitung und durch Konvektion. Je nach Verwendungszweck sind die Heizaggregate ständig eingeschaltet und werden über das aufzuwärmende Halbzeug gefahren oder geschwenkt oder sind starr montiert und werden bei jedem Heizzyklus ein- und ausgeschaltet. Die Intensität der Energieabgabe der Infrarot-Strahler, sei es durch Strahlung oder durch Leitung, bzw. Konvektion, ist, abgesehen von der Einschaltphase über die Zeit konstant, so dass material- oder dimensionsbedingte Unterschiede in der Energieaufnahme zur Erreichung bestimmter Verarbeitungstemperaturen nur durch unterschiedliche Heizzeiten realisiert werden können. Damit werden jedoch zwangsläufig im aufzuheizenden Halbzeug Temperaturgradienten erzeugt.

Ferner sind Vorrichtungen, die eine zeitabhängige Dosierung thermischer Energie ermöglichen, Stand der Technik.

So wird durch die DE-B2-2216 651 eine Vorrichtung beschrieben, bei der Infrarot-Heizelemente zunächst auf eine höhere Temperatur (z.B. 500°C) aufgeheizt und über die zu erwärmende Kunststoffplatte gefahren werden, wobei sich die Heizelemente auf eine niedrigere Temperatur abkühlen, wohingegen sich das Halbzeug entsprechend aufheizt.

Weiterhin ist die Dosierungmöglichkeit elektrischer Energie durch Halbleiterbauelemente nach der Methode des sogenannten Phasenanschnitts bekannt. So wird in der DE-A-2 128 667 eine Widerstandsschweissanlage beschrieben, bei der über ein Programmschaltwerk die Phasenanschnittsteuerung des Schweissaggregates nachgestellt werden kann, um durch die damit zu erzielende Kompensation des Elektrodenabbrandes gleichmässige Schweissergebnisse zu erreichen. Steuerungsaufgaben dieser Art lassen sich auch mittels eines Mikroprozessors durchführen.

Weiterhin sind Vorrichtungen bekannt und durch DE-B-1 072 638 sowie DE-C-1 083 745 beschrieben, wonach man durch die besondere Anordnung von Heizelementen und deren sequentielles Ansteuern sowie durch die Verwendung von Transporteinrichtungen Temperaturprofile räumlicher und zeitlicher Art erzeugen kann.

Es ist also bekannt, dass das Aufheizen von thermoplastischen Halbzeugen unter Zugrundelegung einer quasimathematischen Beziehung zwischen der in oder auf dem Halbzeug herrschenden Temperatur und der Expositionszeit geschehen kann. Aus der Schar möglicher Temperatur-Zeit-Kennlinien kann jedoch nur ein einziger Kurvenverlauf als optimale Aufheizfunktion angesehen werden.

Es war daher Aufgabe der vorliegenden Erfindung, diese bestmögliche Aufheizfunktion, längs derer das Halbzeug zu jedem Zeitpunkt des Aufheizvorganges mit der maximal möglichen Energierate beaufschlagt wird, mit den Mitteln der Elektronik (Mikroprozessor) nachzubilden und eine entsprechende Steuerspannung zu erzeugen.

Diese Aufgabe wird bei einer Vorrichtung der eingangs bezeichneten Art erfindungsgemäss gelöst durch eine mit einem Mikroprozessor versehene elektronische Steuereinrichtung, die eine periodisch auf- und abschwingende elektrische Signalspannung erzeugt, deren Verlauf und Amplitude entsprechend dem Wärmeaufnahmevermögen der Halbzeuge veränderbar ist und eine durch die Signalspannung aussteuerbare Speiseeinrichtung, die ihrerseits dem mit Infrarot-Hellstrahlern ausgerüsteten Heizaggregat mittels einer Phasenanschnittsteuerung einen periodischen, in Verlauf und Amplitude der vorprogrammierten Signalspannung entsprechenden elektrischen Strom zudosiert.

Hierdurch wird dem Halbzeug zu Beginn eines Aufheizvorganges eine relativ grosse Energiemenge zugeführt. Entsprechend dieser starken Beaufschlagung erwärmt sich das Halbzeug sehr schnell. Bei konstanter Energierate würde innerhalb kurzer Zeit die Zersetzungstemperatur der Thermoplaste erreicht werden. Mit Hilfe der von dem Mikroprozessor gesteuerten elektronischen Einrichtung ist es jedoch möglich, die Energiezuführungsrate von einem Maximum aus kontinuierlich zu verkleinern, bzw. auf Null zurückzuführen. Dabei kann der Anstieg auf das Intensitätsmaximum, die Amplitude des Maximums selbst sowie der zeitliche Verlauf der Intensitätsabnahme jeweils auch stufenlos verstellt und den Dimensionen oder den entsprechenden Eigenschaften des Halbzeuges optimal angepasst werden.

Es hat sich insgesamt als zweckmässig erwiesen, für eine solche, in der Zeit modulierte Intensitätsvariation ein Heizaggregat mit kurzer Zeitkonstante, bei welchem kurzzeitige Schwankungen der Speisespannung synchrone Änderung der Abstrahlungsintensität bewirken, insbesondere ein mit Infrarot-Hellstrahlern ausgerüstetes Heizaggregat, zu verwenden.

Die vorzugebenden Intensitätsschwankungen werden bewerkstelligt durch eine entsprechend dimensionierte, aus steuerbaren Gleichrichtern bestehende Speiseeinrichtung, vorzugsweise eine Leistungsstelleinheit, die nach dem Prinzip der Phasenanschnittsteuerung arbeitet und die den Infrarotstrahlern einen der Modulation analogen elektrischen Strom zudosiert. Die Speiseeinrichtung wird von einer vorprogrammierten Signalspannung angesteuert, die in ihrer Amplitude, ihrem Verlauf und in ihrer Frequenz alle Merkmale der geforderten Intensitätsänderungen sowie den vorgegebenen Zeittakt enthält. Diese Signalspannung wird periodisch erzeugt von einem Mikroprozessor. Die charakeristischen Merkmale dieser Spannung, die direkt den optimalen Aufheizbedingungen für ein Halbzeug bestimmter Provenienz entsprechen, können empirisch durch einfache Aufheizversuche ermittelt werden. Sind die Werte einmal als optimal erkannt, so können sie dem Mikroprozessor je nach Bedarf als Programm mit den verschiedenen Mitteln der Datenverarbeitung eingegeben und fallweise aufgerufen bzw. reproduziert werden.

Nach einem weiteren Merkmal der Erfindung weist die Vorrichtung eine Temperaturregeleinrichtung auf, die mit dem Heizaggregat und der Speiseeinrichtung in Wirkverbindung steht. Die Temperaturregeleinrichtung ist der Steuereinrichtung parallel geschaltet und besteht aus einem Messfühler, einem Regler und einem Stellglied. Bei einem etwaigen Versagen der Speiseeinrichtung, d.h. bei Erreichen eines einstellbaren Temperaturgrenzwertes im Heizaggregat schaltet sie das gesamte Heizsystem verzögerungsfrei ab.

In einer bevorzugten Ausführungsform der Vorrichtung besitzt das Heizaggregat in Förderrichtung mehrere durch die Steuereinrichtung sequentiell schaltbare Heizzonen, so dass ein auf dem Transportband bewegtes Halbzeug synchron mit der jeweils notwendigen Heizenergie beaufschlagt werden kann.

Mit der erfindungsgemässen Vorrichtung können plattenförmige Halbzeuge aus allen thermoplastisch verarbeitbaren Kunststoffen erwärmt werden, beispielsweise Halbzeuge aus Olefinpolymerisaten, wie Polyäthylen oder Polypropylen; Styrolpolymerisaten, wie Polystyrol oder Copolymere des Styrols; Chlor enthaltende Polymerisate, wie Polyvinylchlorid oder chlorierte Polyolefine; Polyamide, Polymethylmethacrylat, Polycarbonat, sowie Mischungen dieser Polymerisate.

Diese Kunststoffe können die üblichen Zusatzstoffe, wie Füllstoffe, Pigmente, Farbstoffe, Antistatika, Stabilisatoren, Flammschutzmittel oder Gleitmittel enthalten.

Die Halbzeuge können auch faserverstärkt sein. Als faserige Füllstoffe sind Matten, Vliese, Filze oder Gewebe geeignet, die aus Glas-, Kohlenstoff- oder Kunststofffasern oder Asbest hergestellt sein können.

Im folgenden wird die Erfindung unter Hinweis auf die Zeichnung anhand eines schematisch dargestellten Ausführungsbeispiels näher erläutert.

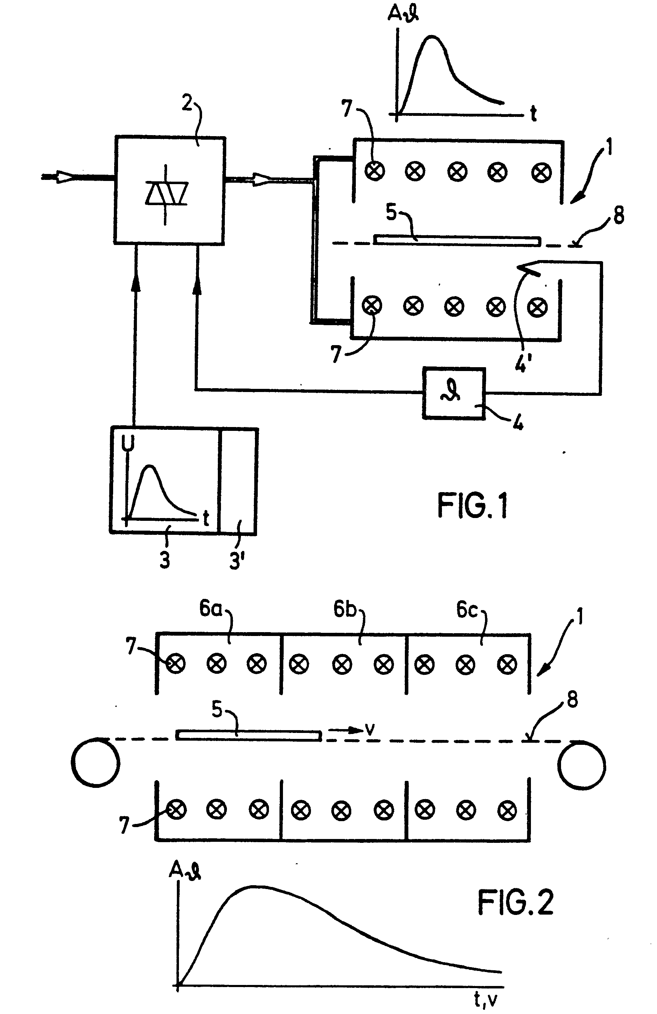

Gemäss den Figuren 1 und 2 besteht die Vorrichtung im wesentlichen aus einem Infrarot-Heizaggregat (1), das mit Infrarot-Hellstrahlern (7) bestückt und entsprechend den Abmessungen des aufzuwärmenden Halbzeugs lückenlos aus einzelnen Heizzonen (6a–6c) aufgebaut ist. Die Energieversorgung des Heizaggregates erfolgt über die Speiseeinrichtung (2). Diese ist ein aus steuerbaren Gleichrichtern, sog. Thyristoren aufgebautes Halbleiteraggregat, mit dem es möglich ist, eine elektrische Leitung stufenlos bis zu einem, von den technischen Daten der Gleichrichter vorgegebenen Maximum zu dosieren. Bevorzugt wird dies mit einer sogenannten Phasenanschnittsteuerung erreicht, indem man periodisch erzeugte Nadelimpulse in ihrer Phasenlage gegenüber dem zur Speisung verwendeten Wechselstrom oder Drehstrom verschiebt. Mit diesen Nadelimpulsen werden die steuerbaren Gleichrichter periodisch auf- und zugesteuert, so dass sie abhängig von der Phasenlage des anliegenden Dreh- oder Wechselstromes unterschiedlich grosse Stromraten den Infrarotstrahlern zudosieren.

Die Steuereinrichtung (3), die mit einem Mikroprozessor (3') eine Einheit bildet, hat die Aufgabe, eine periodische elektrische Schwingung zu erzeugen, deren Verlauf und Amplitude dem optimalen Wärmeaufnahmevermögen A δ in Abhängigkeit der Zeit t (Figur 1) des aufzuheizenden Halbzeuges entspricht. Diese Schwingung besteht aus einem zu einem Maximum aufschwingenden Kurvenast in Form einer e-Funktion und einem daran anschliessenden hyperbelförmig abfallenden Bereich. Sie wird erzeugt als eine elektrische Spannung U in Abhängigkeit der Zeit t mit Werten von 0 bis 10 V oder als elektrischer Strom zwischen 0 und 20 mA. Mit Hilfe dieser Steuerspannung oder dieses Steuerstromes wird die Phasenverschiebung zwischen den Nadelimpulsen und dem an den Thyristoren anliegenden Wechsel- oder Drehstrom erreicht und die Leistungsdosierung durchgeführt.

Die optimale zeitliche Wärmeaufnahmefunktion ist für jedes Halbzeug einmal durch Versuch zu ermitteln. Danach kann die Funktion mittels Lochstreifen, Lochkarte etc. abgespeichert und vom Mikroprozessor (3') aufgerufen und beliebig oft reproduziert werden. Die Frequenz der Schwingungserzeugung lässt sich entweder durch den Mikroprozessor selbst oder durch den Zeittakt der Halbzeugverarbeitung einstellen.

Auch kann die Funktion der optimalen Wärmeaufnahme des Halbzeugs dadurch nachgebildet werden, dass die in der Bewegungsrichtung des Halbzeuges liegenden Infrarotstrahler zeitlich sequentiell angesteuert werden. Damit wird die Zeitachse der Wärmeaufnahmefunktion durch die Bewegung des Halbzeuges ersetzt und das Halbzeug selbst an unterschiedlichen Orten im Heizaggregat dem optimalen Zeitwert der Bestrahlung ausgesetzt.

Mit (4) ist eine Temperaturregeleinrichtung bezeichnet, die mit dem Heizaggregat (1) und der Speiseeinrichtung (2) in Verbindung steht. Die Temperaturregeleinrichtung soll einer thermischen Überlastung des Halbzeuges im Störungsfall vorbeugen. Wegen der hohen installierten Leistungsdichte ist es erforderlich, die Anlage im Störungsfall bei einem Ausfallen der Steuerung schnell und zuverlässig auszuschalten. Dies wird erreicht durch einen von der Steuerung unabhängigen Temperaturregelkreis, bestehend aus einem Temperaturfühler (4'), einem Regler und einem Kurzschluss-Schalter. Der Temperaturfühler (4') befindet sich in der Halbzeugebene im Heizaggregat und wird der gleichen Strahlungsemission ausgesetzt. Die von dem Fühler gemessene Temperatur wird fortlaufend mit einem auf dem Regler eingestellten Sollgrenzwert verglichen. Bei Überschreitung dieses Grenzwertes schliesst ein im Reglerausgang befindlicher Relaiskontakt die Steuerspannung für die Leistungsstelleinheit kurz. Damit wird die Leistungszufuhr sofort unterbrochen.

Mit Hilfe eines Transportbandes (8) werden die Halbzeuge (5) dem Heizaggregat zugeführt und nach dem Aufheizen wieder aus dem Heizaggregat herausgefördert. Der Antrieb des Transportbandes besteht aus einem regelbaren Gleichstrommotor mit sehr geringem Trägheitsmoment. Damit ist es möglich, die Drehzahl des Motors mit kurzer Zeitkonstante zu verstellen und so die Bewegungsgeschwindigkeit des Halbzeugs entsprechend seiner optimalen Aufheizbedingungen zeitlich zu modulieren. Daraus ergibt sich, dass bei Halbzeugen mit grossen Abmessungen und daraus resultierenden hohen Heizenergien die zeitliche Modulation der Strahlungsemission nicht mit voller Amplitude – was zu unerwünschten Netzschwankungen führen kann –, sondern nur mit einem bestimmten, einstellbaren Quotienten der notwendigen Gesamtleistung durchgeführt werden kann und die optimale Bestrahlungszeit durch Variation der Bewegungsgeschwindigkeit erreicht wird. Davon unabhängig lassen sich auch unterschiedliche Geschwindigkeiten für den Ein- und Auslauf der Halbzeuge einstellen.

## Patentansprüche

1. Vorrichtung zum Erwärmen plattenförmiger Halbzeuge aus thermoplastischen Kunststoffen, insbesondere aus faserverstärkten Thermoplasten, mit einem Infrarot-Heizaggregat (1), in welchem die Heizstrahler (7) in ihrer Emissionsleistung zeitabhängig gesteuert werden und dem die Halbzeuge (5) über ein Transportband (8) zugeführt werden, gekennzeichnet durch eine mit einem Mikroprozessor (3') versehene elektronische Steuereinrichtung (3), die eine periodisch auf- und abschwingende elektrische Signalspannung erzeugt, deren Verlauf und Amplitude entsprechend dem Wärmeaufnahmevermögen der Halbzeuge veränderbar ist und eine durch die Signalspannung aussteuerbare Speiseeinrichtung (2), die ihrerseits dem mit Infrarot-Hellstrahlern (7) ausgerüsteten Heizaggregat (1) mittels einer Phasenanschnittsteuerung einen periodischen, in Verlauf und Amplitude der vorprogrammierten Signalspannung entsprechenden elektrischen Strom zudosiert.

2. Vorrichtung nach Anspruch 1, gekennzeichnet durch eine Temperaturregeleinrichtung (4), die mit dem Heizaggregat (1) und der Speiseeinrichtung (2) in Wirkverbindung steht.

3. Vorrichtung nach den Ansprüchen 1 und 2, dadurch gekennzeichnet, dass das Heizaggregat (1) in Förderrichtung des Transportbandes (8) mehrere durch die Steuereinrichtung (2) sequentiell schaltbare Heizzonen (6a, 6b, 6c) aufweist.

## Claims

1. An apparatus for heating sheet-like preshapes, consisting of a thermoplastic, especially of a fiber-reinforced thermoplastic, by means of an infra-red heating unit (1), the radiant intensity of whose radiators (7) is controlled as a function of time, and to which the preshapes (9) are fed by a conveyor belt (8), which apparatus possesses an electronic control unit (3) provided with a microprocessor (3'), which unit generates a periodically increasing and decreasing electrical signal voltage, whose time-curve and amplitude can be varied in accordance with the heat uptake capacity of the preshapes, and a feed unit (2), controlled by the signal voltage, which unit in turn meters to the heating unit (1), which is equipped with bright infra-red radiators (7), by means of a phase control system, a periodic electrical current which in its time-curve and amplitude corresponds to the pre-programmed signal voltage.

2. An apparatus as claimed in claim 1, wherein a temperature-regulating unit (4) is interactively connected to the heating unit (1) and the feed unit (2).

3. An apparatus as claimed in claims 1 and 2, wherein the heating unit (1) possesses a plurality of heating zones (6a, 6b, 6c) arranged in the direction of travel of the conveyor belt (8) and switchable in sequence by the control unit (3).

## Revendications

1. Dispositif de chauffage de demi-produits plats en matières thermoplastiques, en particulier en matières thermoplastiques renforcées par des fibres, avec un appareil de chauffage infrarouge (1), dans lequel les radiateurs (7) ont leur puissance d'émission commandée en fonction du temps et auxquels les demi-produits (9) sont amenés par une bande transporteuse (8), caractérisé par le fait qu'il comporte un moyen de commande (3) électronique muni d'un microprocesseur (3') et qui produit une tension de signal électrique, oscillant périodiquement, dont on peut faire varier l'allure et l'amplitude selon la capacité d'absorption de chaleur des demi-produits et un moyen d'alimentation (2) modulable par la tension de signal et qui, à son tour, fournit à l'appareil de chauffage (1) équipé des radiateurs infra-rouges (7), par l'intermédiaire d'une commande à déphasage, un courant électrique périodique, correspondant en allure et amplitude à la tension de signal pré-programmée.

2. Dispositif selon la revendication 1, caractérisé par le fait qu'il comprend un moyen de réglage de température (4) qui est en liaison active avec l'appareil de chauffage (1) et le moyen d'alimentation (2).

3. Dispositif selon les revendications 1 et 2, caractérisé par le fait que l'appareil de chauffage (1) comporte, dans la direction d'entraînement de la bande transporteuse (8), plusieurs zones de chauffe (6a, 6b, 6c) qui peuvent être mises en circuit séquentiellement par le moyen de commande (2).

FIG.1

FIG.2